# EUROPÄISCHE PATENTSCHRIFT

(11) **EP 0 575 733 B1**
(45) Veröffentlichungstag und Bekanntmachung des Hinweises auf die Patenterteilung: **18.10.1995**
(21) Anmeldenummer: 93107257.3
(22) Anmeldetag: 05.05.1993
(51) Int. Cl.: B60N 2/30, B60N 2/24

(54) **Vorklappbarer Reisebegleitsitz in Omnibussen**
Tiltable assistant driver seat for omnibus
Siège rabattable de conducteur assistant pour omnibus

(30) Priorität: 24.06.1992 DE 4220661
(43) Veröffentlichungstag der Anmeldung: 29.12.1993
(73) Patentinhaber: MAN Nutzfahrzeuge Aktiengesellschaft, 80976 München (DE)
(72) Erfinder: Rieck, Gerhard, Dipl.-Ing., W-8000 München 60 (DE); Geyer, Ludwig, W-8039 Puchheim (DE); Krimmling, Harald, Dipl.-Ing., W-8893 Hilgertshausen (DE)

(56) Entgegenhaltungen:
- EP-A- 0 536 477
- DE-U- 9 206 800
- GB-A- 424 012

## Beschreibung

Die Erfindung betrifft einen vorklappbaren Reisebegleitsitz in Omnibussen mit einer am Sitzfuß befindlichen mechanischen Ver- und Entriegelungseinrichtung, deren zur Sitz-Klappung dienende Auslösung durch Aktivierung eines Organs herbeiführbar ist.

Aus der nicht vorveröffentlichten EP-A-0 536 477 ist ein Fahrernebensitz bekannt, der mittels eines teleskopartigen Zylinders am Fahrzeug befestigt und schwenkbar ist. Dieser Teleskopzylinder ist in Sitzgebrauchsstellung durch eine mechanische Ver- und Entriegelungseinrichtung gehalten, die am Teleskopzylinder angreift und dort auch von Hand betätigbar für Sitz-Klappung aktivierbar ist. Ein derartiges System ist, was die Auslösung der Sitz-Klappung anbelangt, bedienungsunfreundlich und benötigt einen schweren, massiven Teleskopzylinder, der einen großen Bauraum beansprucht. Da zum Ein- und Aussteigen der Passagiere der Reisebegleitsitz vorgeklappt werden muß, ist eine mechanische am Sitzfuß des Reisebegleitsitzes von Hand betätigbare Entriegelung sehr unpraktisch für den Fahrer, da dieser dann seinen Platz verlassen muß. Außerdem wären solche Entriegelungshebel für unerfahrene Businsassen schwer oder gar nicht zu finden und können somit in einem Notfall, der ein schnelles Verlassen des Busses erforderlich macht, zu einem Sicherheitsrisiko werden.

Der Erfindung liegt die Aufgabe zugrunde, den Reisebegleitsitz vom Fahrersitz aus mühelos abklappen zu können und weiterhin sicherheitsrelevanten Gesichtspunkten Rechnung zu tragen.

Diese Aufgabe ist erfindungsgemäß dadurch gelöst, daß zur Verstellung und Positionierung des Reisebegleitsitzes ein pneumatisch oder hydraulisch betätigter Verstellzylinder und ein pneumatisch oder hydraulisch betätigbarer Ver- und Entriegelungszylinder vorgesehen sind, die durch Betätigung eines elektrischen Schalten oder Bowdenzugs von Hand oder automatisch über Beschleunigungsgeber wirksam setzbar sind. Solcherart kann der Busfahrer den Reisebegleitsitz mühelos verstellen, ohne daß er sich von seinem Sitz zu erheben braucht, indem er den am oberen Seitenteil der Rücklehne oder am Armaturenbrett befindlichen relevanten Schalter drückt. Das gleiche gilt für Passagiere, die beim Ein- oder Aussteigen einen in der Seitenwand der Sitz-Rückenlehne befindlichen Schalter direkt im Auge haben. Es wird somit ein Bücken und ein langwieriges Suchen im Sitzfußbereich vermieden. Es kann aber alternativ auch ein Bowdenzug vorgesehen sein, der vom Fahrer von seinem Sitz aus betätigbar ist. In weiterer Alternative kann auch ein Beschleunigungsgeber zum Einsatz kommen, der automatisch im Gefahrenfall, also bei erhöhtem Bremswiderstand, einen Befehl auf Verstell- und Entriegelungszylinder gibt, den Sitz wegzuklappen, so daß ohne Verzögerung die Fluchtwege freigegeben sind. Die weiteren Unteransprüche enthalten detaillierte Ausbildungen der Erfindung.

Nach einer besonderen Variante der Erfindung sind zur Verstellung und Positionierung des Reisebegleitsitzes ein selbsthemmender Spindelantrieb oder ein Schneckentrieb vorgesehen. Damit entfällt dann auch der Ver- und Entriegelungszylinder, da die vorgenannten Elemente selbsthemmend sind.

Die Erfindung ist nachfolgend an Hand eines in der Zeichnung dargestellten Ausführungsbeispieles näher erläutert. In der Zeichnung zeigen:
- Fig. 1: die Seitenansicht eines Reisebegleitsitzes,
- Fig. 2: die Vorderansicht eines Reisebegleitsitzes,
- Fig. 3: eine Einzelheit im Fußbereich des Reisebegleitsitzes.

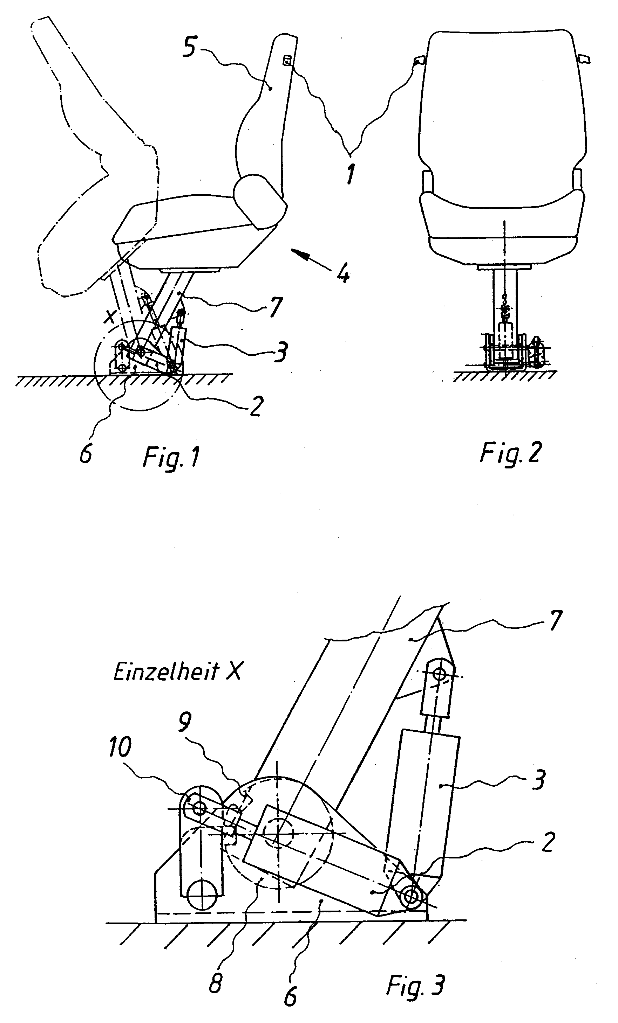

Der Reisebegleitsitz 4 gemäß den Fig. 1 und 2 ist über eine Sitzstützstange 7 gelenkig mit einem aufdem Fußboden befestigten Lagerbock 6 verbunden. Der Reisebegleitsitz 4 kann über einen Verstellzylinder 3, der einerends am Lagerbock 6 und andernends an der Sitzstützstange 7 befestigt ist, aus seiner Nutzposition in eine den Ein- und Ausstieg freigebende abgeklappte Position geschwenkt werden. Am Lagerbock 6 und an einem Schwenkarm gelagert ist außerdem ein Verund Entriegelungszylinder 2 vorgesehen, der zur Ver- und Entriegelung des Reisebegleitsitzes 4 in seinen jeweiligen Endpositionen dient. Hierzu ist fest an der Sitzstützstange 7 ein Rastelement 8 mit seiner Raste 9 angeordnet. Die Raste 9 ist vom Kolbenstangenkopf 10 des Ver- und Entriegelungszylinders 2 beaufschlagt und kann bei dessen Druckentlastung von einer Rastposition in die andere gleiten.

### Bezugszeichenliste

- 1: elektrischer Schalter
- 2: Ver- und Entriegelungszylinder
- 3: Verstellzylinder
- 4: Reisebegleitsitz
- 5: Rückenlehne
- 6: Lagerbock
- 7: Sitzstützstange
- 8: Rastelement
- 9: Raste
- 10: Kolbenstangenkopf
- 11: Hebel

## Patentansprüche

1. Vorklappbarer Reisebegleitsitz in Omnibussen, mit einer am Sitzfuß befindlichen mechanischen Ver- und Entriegelungseinrichtung, deren zur Sitz-Klappung dienende Auslösung durch Aktivierung eines Organs (1 ; 11) herbeiführbar ist, dadurch gekennzeichnet, daß zur Verstellung und Positionierung des Reisebegleitsitzes (4) ein pneumatisch oder hydraulisch betätigter Verstellzylinder (3) und ein pneumatisch oder hydraulisch betätigter Ver- und Entriegelungszylinder (2) vorgesehen sind, die durch Betätigung eines elektrischen Schalters (1) oder Bowdenzugs von Hand (11), oder automatisch über Beschleunigungsgeber wirksam setzbar sind.

2. Vorklappbarer Reisebegleitsitz nach Anspruch 1, dadurch gekennzeichnet, daß eine in einem auf dem Fußboden befestigten Lagerbock (6) schwenkbare, den Sitzfuß bildende Sitzstützstange (7) ein Rastelement (8) aufweist, in deren Raste (9) der Kolbenstangenkopf (10) des Ver- und Entriegelungszylinders (2) eingreift.

3. Vorklappbarer Reisebegleitsitz nach Anspruch 1, dadurch gekennzeichnet, daß zur Verstellung des Sitzes (4) eine Feder oder eine Gasfeder vorgesehen sind.

4. Vorklappbarer Reisebegleitsitz nach Anspruch 1, dadurch gekennzeichnet, daß beidseitig oben an der Rückenlehne (5) des Reisebegleitsitzes (4) je ein elektrischer Schalter (1) oder am Armaturenbrett ein elektrischer Schalter (1) als Auslöseorgan angeordnet ist.

5. Vorklappbarer Reisebegleitsitz nach Anspruch 1, dadurch gekennzeichnet, daß bei elektropneumatischer Betätigung der Zylinder (2, 3) über Beschleunigungsgeber ein Zeitverzögerungsglied vorgesehen ist.

6. Vorklappbarer Reisebegleitsitz nach Anspruch 1, dadurch gekennzeichnet, daß der zur Verstellung und Positionierung des Reisebegleitsitzes (4) dienende Bowdenzug vom Fahrersitz aus betätigbar ist.

7. Vorklappbarer Reisebegleitsitz in Omnibussen, mit einer am Sitzfuß befindlichen mechanischen Ver- und Entriegelungseinrichtung, deren zur Sitz-Klappung dienende Auslösung durch Aktivierung eines Organs herbeiführbar ist, dadurch gekennzeichnet, daß zur Verstellung und Positionierung des Reisebegleitsitzes ein selbsthemmender Spindelantrieb oder Schneckentrieb vorgesehen ist.

## Claims

1. Forward-folding courier seat in coaches with a manually actuated, mechanical locking and releasing device at the seat foot, characterised in that for adjusting and positioning the courier seat (4) a pneumatically or hydraulically actuated adjusting cylinder (3) and a pneumatically or hydraulically actuated locking and releasing cylinder (2) are provided that can be activated via electrical switches (1), Bowden cable or acceleration transmitters.

2. Forward-folding courier seat according to Claim 1, characterised in that the seat support bar (7) is swivel-mounted in the bearing mount (6) and provided with a detent element (8) in whose detent (9) the top (10) of the plunger rod engages.

3. Forward-folding courier seat according to Claim 1 or 2, characterised in that a spring or gas spring is provided for adjusting the seat (4).

4. Forward-folding courier seat according to the Claims 1 to 3, characterised in that the electrical switches (1) are arranged on both sides at the top of the back rest (5) of the courier seat (4) or in the instrument panel.

5. Forward-folding courier seat according to one or several of the Claims 1 to 4, characterised in that a time delay element is provided if the cylinders are actuated electropneumatically via acceleration transmitters.

6. Forward-folding courier seat in coaches with a manually actuated, mechanical locking and releasing device at the seat foot, characterised in that a self-locking spindle drive or worm gear is provided for adjusting and positioning the courier seat.

7. Forward-folding courier seat according to Claim 1, characterised in that a Bowden cable actuated from the driver's seat is provided for adjusting and positioning the courier seat (4).

## Revendications

1. Siège d'accompagnateur, rabattable vers l'avant, pour autocar, comportant une installation de verrouillage et de déverrouillage mécanique actionnée à la main, prévue au niveau du pied du siège, caractérisé en ce que pour régler et positionner le siège d'accompagnateur (4) il est prévu un vérin de réglage (3) à commande pneumatique ou hydraulique et un vérin de verrouillage et de déverrouillage (2) à commande pneumatique ou hydraulique, ces vérins pouvant être mis en oeuvre par des interrupteurs électriques (1), un câble Bowden ou un capteur d'accélération.

2. Siège d'accompagnateur, rabattable vers l'avant, selon la revendication 1, caractérisé en ce que la barre d'appui de siège (7) pivotante dans le bloc palier (6) comporte un élément d'arrêt (8) dont l'encoche (9) reçoit la tête de la tige de piston (10).

3. Siège d'accompagnateur, rabattable, selon la revendication 1 ou 2, caractérisé par un ressort ou un ressort à air pour régler le siège (4).

4. Siège d'accompagnateur, rabattable, selon les revendications 1 à 3, caractérisé en ce que les interrupteurs électriques (1) sont prévus de part et d'autre en haut du dossier (5) du siège d'accompagnateur (4) ou au niveau du tableau de bord.

5. Siège d'accompagnateur, rabattable, selon une ou plusieurs des revendications 1 à 4, caractérisé en ce qu'en cas de commande électropneumatique des vérins par un générateur d'accélération, il est prévu un élément de temporisation.

6. Siège d'accompagnateur, rabattable vers l'avant, pour autocar, comportant une installation de verrouillage et de déverrouillage mécanique, actionnée à la main, équipant le pied du siège, caractérisé par un entraînement à broche ou à vis, autobloquant, pour régler et positionner le siège d'accompagnateur.

7. Siège d'accompagnateur rabattable vers l'avant, selon la revendication 1, caractérisé en ce que pour régler et positionner le siège d'accompagnateur (4) il est prévu un câble Bowden commandé à partir du siège du conducteur.
